(19) Europäisches Patentamt / European Patent Office / Office européen des brevets

(11) **EP 4 341 672 B1**

(12) **EUROPEAN PATENT SPECIFICATION**

(45) Date of publication and mention
of the grant of the patent:
**05.11.2025 Bulletin 2025/45**

(21) Application number: **22727274.7**

(22) Date of filing: **03.05.2022**

(51) International Patent Classification (IPC):
**G01N 21/71** (2006.01)     **G01J 3/443** (2006.01)
**G01J 3/02** (2006.01)     **G01J 3/18** (2006.01)
**G01J 3/28** (2006.01)

(52) Cooperative Patent Classification (CPC):
**G01N 21/718; G01J 3/443;** G01J 3/0208;
G01J 3/0218; G01J 3/18; G01J 3/2823

(86) International application number:
**PCT/EP2022/061740**

(87) International publication number:
**WO 2022/243020 (24.11.2022 Gazette 2022/47)**

(54) **ARC SCANNING METHODS FOR LASER INDUCED BREAKDOWN SPECTROSCOPY APPLICATIONS**

BOGENABTASTVERFAHREN FÜR ANWENDUNGEN DER LASERINDUZIERTEN DURCHBRUCHSSPEKTROSKOPIE

MÉTHODES DE BALAYAGE À L'ARC POUR LES APPLICATIONS DE SPECTROMÉTRIE D'ÉMISSION ATOMIQUE DE PLASMA INDUIT PAR LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2021 GB 202107038**

(43) Date of publication of application:
**27.03.2024 Bulletin 2024/13**

(73) Proprietor: **Thermo Fisher Scientific (Ecublens) Sarl**
**1024 Ecublens (CH)**

(72) Inventor: **LANCUBA, Patrick**
**1024 Ecublens (CH)**

(74) Representative: **Parlett, Peter Michael**
**Thermo Fisher Scientific**
**Stafford House**
**1 Boundary Park**
**Hemel Hempstead, Hertfordshire HP2 7GE (GB)**

(56) References cited:
**US-A1- 2009 073 586     US-A1- 2014 204 377**

- **JOLIVET L ET AL: "Review of the recent advances and applications of LIBS-based imaging", SPECTROCHIMICA ACTA. PART B: ATOMIC SPECTROSCOPY, vol. 151, 26 November 2018 (2018-11-26), pages 41 - 53, XP085585158, ISSN: 0584-8547, DOI: 10.1016/J.SAB.2018.11.008**
- **KYUNGMIN HWANG ET AL: "Frequency selection rule for high definition and high frame rate Lissajous scanning", SCIENTIFIC REPORTS, vol. 7, no. 1, 26 October 2017 (2017-10-26), XP055735017, DOI: 10.1038/s41598-017-13634-3**
- **ZHIJIANG CHEN ET AL: "Sensitive detection of heavy metals in water using microchip Laser Induced Breakdown Spectroscopy", CONFERENCE ON LASERS AND ELECTRO-OPTICS (CLEO) AND QUANTUM ELECTRONICS AND LASER SCIENCE CONFERENCE (QELS), 2010 : 16 - 21 MAY 2010, SAN JOSE, CA, USA, IEEE, PISCATAWAY, NJ , USA, 16 May 2010 (2010-05-16), pages 1 - 2, XP031701027, ISBN: 978-1-55752-890-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 341 672 B1

**Description**

FIELD OF THE DISCLOSURE

This disclosure in general relates to systems and methods for performing laser-induced breakdown spectroscopy.

BACKGROUND

Elemental analysis techniques aid in determining the elemental composition of a material in various forms. Elemental analysis techniques range from destructive (e.g., material is destroyed in testing) to semi-destructive (e.g., material is sampled or surface damaged) to fully non-destructive (e.g., material is left fully intact). Example techniques can include Inductively Coupled Plasma-Atomic Emission Spectroscopy (e.g. ICP-AES), ICP-Mass Spectrometry (e.g. ICP-MS), Electrothermal Atomization Atomic Absorption Spectroscopy (e.g. ETA-AAS), X-Ray Fluorescence Spectroscopy (e.g. XRF), X-Ray Diffraction (e.g. XRD), and Laser-induced Breakdown Spectroscopy (e.g. LIBS). Elemental analysis may be either qualitative or quantitative and often requires calibration to known standards.

Laser-induced breakdown spectroscopy (LIBS) is an analytical technique used to analyze a large variety of materials, including metals, semiconductors, polymers, glasses, ceramics, and minerals. LIBS can very accurately detect and quantify elements of the periodic table. It can perform analysis of large and small samples, requires little-to-no sample preparation, and can be used for both bulk elemental analysis and microscanning for imaging. LIBS relies on pulsed energy emissions, such as pulsed laser emission, directed toward the sample to ablate, atomize, and ionize matter. The impact of each laser pulse onto the sample's surface ablates matter, followed by atomization and ionisation to create a plume of plasma, light from which can be analyzed to perform qualitative and quantitative spectroscopy measurements. LIBS can therefore provide an easy to use, rapid, and in-situ chemical analysis with high precision, desirable detection limits, and low cost.

Laser interactions with matter are governed by quantum mechanics which describe how photons are absorbed or emitted by atoms. If an atom absorbs a photon one or more electrons move from a ground state to a higher energy quantum state. Electrons tend to occupy the lowest possible energy levels, and in the cooling/decay process, the atom emits a photon to return to a lower energy level. The different energy levels of different atoms produce different photon energies for each kind of atom, with narrowband emissions of light due to their quantization. These emissions correspond to the spectral emission lines found in LIBS spectra.

There are three basic stages in the plasma lifetime. The first stage is the ignition process which includes the initial bond breaking and plasma formation during the laser pulse. This is affected by the laser type, laser power, and pulse duration. The second stage in plasma life is the most critical for optimization of LIBS spectral acquisition and measurement because the plasma causes atomic emission during the cooling process. After ignition, the plasma will continue expanding and cooling. At the same time, the electron temperature and density will change. This process depends on ablated mass, spot size, energy coupled to the sample, and environmental conditions (state of the sample, pressure, etc.).

The last stage of the plasma life is less useful for LIBS measurements. A quantity of ablated mass is not excited as vapor or plasma; hence this amount of material is ablated as particles and these particles create condensed vapor, liquid sample ejection, and solid sample exfoliation, which do not emit radiation. Moreover, ablated atoms become cold and create nanoparticles in the recombination process of plasma. US2014/204377 A1 discloses a handheld LIBS spectrometer in which a laser ablation spot is moved to multiple locations on a sample surface. Jolivet et al, "Review of the recent advances and applications of LIBS-based imaging", SPECTROCHIMICA ACTA. PART B: ATOMIC SPECTROSCOPY, vol. 151, pages 41-53, discloses conventional LIBS scanning paths, which are essentially linear. US2009/073586 A1 discloses methods of inductively coupled plasma (ICP) emission, or ICP mass spectrometry, or flowing afterglow mass spectrometry, for which various raster patterns are described. Kyungmin Hwang et al, "Frequency selection rule for high definition and high frame rate Lissajous scanning", Scientific Reports, vol. 7, no. 1, 26 October 2017, describes a technique known as Lissajous scanning for laser scanning.

SUMMARY

In a first embodiment, a method for compositional analysis includes providing a sample having a surface containing an area to be analyzed and moving an ablation point to a position of a plurality of positions on the surface along an arc path defined by a plurality of arcs. The plurality of arcs extend from an edge of the area to another edge of the area and each arc is concave in a direction of scanning. The arc path follows adjacent arcs of the plurality of arcs. The method further includes pulsing an energy source to provide an electromagnetic energy beam to ablate material at the ablation point, collecting an emission spectrum in response to pulsing the energy source; and analyzing the emission spectrum to determine a composition at the surface. The emission spectrum is a spectrum of light emission.

In an example of the first embodiment, the method further includes moving the ablation point to a second position on the surface along the path, the second position adjacent the first position along the path.

In another example of the first embodiment and the above example, moving the ablation point includes moving the sample using a translation plate.

In a further example of the first embodiment and the above examples, moving the ablation point includes positioning mirrors.

In an additional example of the first embodiment and the above examples, the energy source includes a laser.

In another example of the first embodiment and the above examples, collecting the emission spectrum includes collecting the emission spectrum with a solid state device or a photomultiplier.

In a further example of the first embodiment and the above examples, the arc path follows adjacent arcs of the plurality of arcs in different angular directions along the adjacent arcs.

In an additional example of the first embodiment and the above examples, the plurality of arcs have a common center point and are distributed at different radii. For example, the common center point is disposed at an edge of the surface. In an example, the common center point is disposed at an intersection of two edges of the surface. In another example, the common center point is disposed outside of the bounds of the surface. In a further example, moving the ablation point includes successively scanning arcs of the plurality of arcs in a direction towards the common center point. In an additional example, each arc of the plurality of arcs is distributed equidistant from an adjacent arc along a radial direction from the common center point.

In another example of the first embodiment and the above examples, the plurality of arcs have two common foci. For example, moving the ablation point includes successively scanning arcs of the plurality of arcs in a direction towards the common foci. In another example, each arc of the plurality of arcs is distributed equidistant from an adjacent arc along a direction from the common foci.

In a further example of the first embodiment and the above examples, each position of the plurality of positions within an arc of the plurality of arcs is distributed to be linearly equidistant.

In an additional example of the first embodiment and the above examples, each position of the plurality of positions within an arc of the plurality of arcs is distributed to be equidistant along the arc.

In another example of the first embodiment and the above examples, the position on an arc of the plurality of arcs is an equal distance from another position on the arc of the plurality of arcs and a further position on an adjacent arc of the plurality of arcs.

In a further example of the first embodiment and the above examples, the method further includes selecting a sampling density and determining a number of arcs defining the plurality of arcs based at least in part on the selected sampling density.

In an additional example of the first embodiment and the above examples, analyzing includes determining a composition at the position and averaging the composition with other compositions determined at other positions of the plurality of positions.

In another example of the first embodiment and the above examples, analyzing includes determining a composition at the position and producing a positionally-resolved image including the composition displayed at a relative position with other compositions displayed at other relative positions.

In a further example of the first embodiment and the above examples, each arc of the plurality of arcs has a non-zero and non-infinite radius of curvature.

In a second embodiment, a system includes an energy source to provide an energy beam and a positioning mechanism to position relatively a surface of a sample and the energy beam to provide an ablation point at a position of a plurality of positions on the surface. The surface contains an area to be analyzed. The system further includes a collection lens directed to collect an emission spectrum from the ablation point, a spectrometer in optical communication with collection lens, and a controller in communication with the positioning mechanism. The controller is to direct movement of the ablation point on the surface to the plurality of positions along an arc path defined by a plurality of arcs extending from an edge of the area to another edge of the area, wherein each arc is concave in a direction of scanning.

In an example of the second embodiment, the system further includes an F-theta lens in a path of the energy beam.

In another example of the second embodiment and the above examples, the positioning mechanism includes adjustable mirrors.

In a further example of the second embodiment and the above examples, the arc path follows adjacent arcs of the plurality of arcs in different angular directions along the adjacent arcs.

In an additional example of the second embodiment and the above examples, the plurality of arcs have a common center point and are distributed at different radii. For example, the common center point is disposed at a corner of the surface. In an example, the controller is to direct movement of the ablation point to successively scan arcs of the plurality of arcs in a direction towards the common center point. In another example, each arc of the plurality of arcs is distributed equidistant from an adjacent arc along a radial direction from the common center point.

In another example of the second embodiment and the above examples, the plurality of arcs have two common foci. For example, the controller is to direct movement of the ablation point to successively scan arcs of the plurality of arcs in a direction towards the common foci. In an example, each arc of the plurality of arcs is distributed equidistant from an adjacent arc along a direction from the common foci.

In a further example of the second embodiment and the above examples, each arc of the plurality of arcs has a non-zero and non-infinite radius of curvature.

In an additional example of the second embodiment and the above examples, each position of the plurality of positions within an arc of the plurality of arcs is distributed to be linearly equidistant.

In another example of the second embodiment and the above examples, a position of the plurality of positions on an arc of the plurality of arcs is an equal distance from another position of the plurality of positions on the arc of the plurality of arcs and a further position of the plurality of positions on an adjacent arc of the plurality of arcs.

BRIEF DESCRIPTION OF THE DRAWINGS

The present disclosure may be better understood, and its numerous features and advantages made apparent to those skilled in the art by referencing the accompanying drawings.

FIG. 1 and FIG. 2 include illustrations of example laser-induced breakdown spectroscopy systems.

FIG. 3, FIG. 4, FIG. 5, and FIG. 6 include illustrations of prior art scanning patterns and their associated array of ablation points.

FIG. 7 includes an illustration of an example positionally-resolved compositional map.

FIG. 8, FIG. 9, FIG. 10, FIG. 11, FIG. 12, and FIG. 13 include example arc pathways and their associated array of ablation points.

FIG. 14, FIG. 15, FIG. 16, and FIG. 17 include example arcs and associated center points.

FIG. 18 and FIG. 19 include example arcs of non-circular configurations.

FIG. 20 includes a block flow diagram illustrating an example method for laser-induced breakdown spectroscopy.

FIG. 21 includes an illustration of an example arc pathway overlaying an irregular shape.

FIG. 22 includes an illustration of example arc pathways to test composition at different depths.

FIG. 23 includes a block flow diagram of an example method for performing laser-induced breakdown spectroscopy.

FIG. 24, FIG. 25, FIG. 26, FIG. 27, and FIG. 28 include illustrations of example images indicating positionally-resolved composition.

The use of the same reference symbols in different drawings indicates similar or identical items.

DETAILED DESCRIPTION

In an embodiment, a system for compositional analysis includes an energy source to provide an energy beam directed at an ablation point on a surface of a sample. The energy source can, for example, be a laser. The ablation point can be moved to positions on the surface sequentially along an arc path or arc pathway. In an example, the arc path is defined by a plurality of arcs, wherein the path follows adjacent arcs in different angular directions along the adjacent arcs. In an example, the plurality of arcs can be circular and can have a common center point while being distributed at different radii from the center point. In another example, the plurality of arcs can have two common foci points. Each arc of the plurality of arcs has a radius of curvature, although the radius of curvature may vary across the arc. Each arc is concave in the direction of scanning, for example, on the side facing the common center point or foci. The system can include a controller that directs the movement of the ablation point to the positions along the arc path. The system can further include lenses and mirrors, or optionally, linear stage platforms to facilitate movement of the ablation point. The energy beam ablates material from the surface of the sample at the ablation point. The ablated material evolves an emission spectrum. The system can include a collection system to collect the emission spectrum. In an example, the collection system includes a collection lens optically connected to a spectral analyzer or spectrometer to determine the wavelengths emitted by the ablated material. The material. The system can use the emission spectrum to determine which elements are present and optionally, in what quantities.

**In** a further example, a method for compositional analysis includes providing a sample having a surface. At each position sequentially along an arc path, material is ablated from the surface at the position, an emission spectrum is collected, and the emission spectrum is analyzed to determine a composition at the surface, optionally wherein the emission spectrum is converted to a digital signal for further analysis to determine the composition. The compositions can be analyzed, such as through averaging, to determine an average surface composition. **In** another example, compositions at positions can be used to form an image or map of positionally-resolved compositions.

It has been discovered that conventional scanning methods leave artifacts when displayed as a positionally-resolved image or map. Such artifacts can appear as blurring or smearing on the image. In particular, the presence of such artifacts brings into question both the accuracy of an image and the accuracy of any average derived from composition measurements. It is believed that these artifacts are caused by previously ejected material, and it has been discovered that conventional scanning methods exacerbate the blurring problems because of a strong material transport effect when moving the pulsed laser in a single direction, i.e. along a substantially straight path. In contrast, it is been discovered that the use of an arc path traversing positions on a surface reduces the effect of material transport, and in particular, removes the appearance of artifacts such as blurring or smearing. Moreover, when using galvo mirrors, the arc path provides for movement between points along each arc in the same direction with limited changes in direction, limiting stress and strain on mechanical aspects of the system, particularly the galvo mirrors.

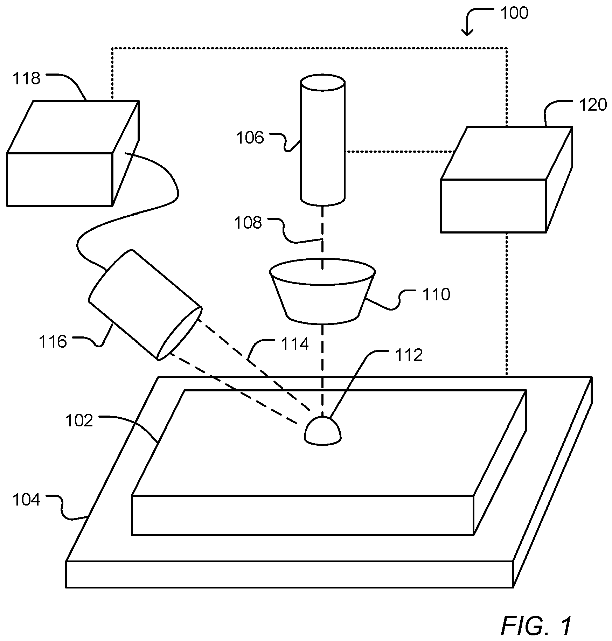

FIG. 1 includes a schematic illustration of a system 100 for performing compositional analysis, for example, through laser-induced breakdown spectroscopy. A sample 102 is placed on a platform 104. An energy source 106 directs an energy beam 108 through optical systems, such as lenses 110, at an ablation point 112 positioned on the surface of the sample 102. Material is ablated from the surface of the sample 102 and at least a portion of the ablated material is atomized or ionized, resulting in an emission spectrum 114 that is collected by a collection lens 116 optically connected to a spectrometer 118, for example, using a fiber-optic cable.

The energy source 106 can be a laser. In an example, the energy source can be a pulsed laser having a typical wavelength in a range of 200 nm to 1100 nm, such as 1064 nm, 532 nm, or 266 nm. Further, the energy source can have a peak power in a range of 0.5 MW/cm$^2$ to 2 GW/cm$^2$, such as at least 1 MW/cm$^2$, sufficient for ablating material from a surface of a sample and to probe elemental composition. For example, the laser pulses can have an energy in a range of 100 $\mu$J-100 mJ and a pulse width in the femtosecond, picosecond or nanosecond regime with a pulse repetition rate of up to the MHz regime. The laser may be a mode-locked or Q-switched laser. For example, the laser may be a passive Q-switched or an active Q-switched laser.

Lens 110 can include a spherical lens, a flat-field scanning lens, e.g., an F-tan($\theta$) scanning lens, or an F-Theta scanning lens. In particular, the lens 110 is an F-Theta scanning lens.

The collection system can include the collection lens 116 and a spectrometer 118. In an example, spectrometer includes an imaging apparatus, such as a solid state device, for example, a charge coupled device (CCD) imaging apparatus, or a photomultiplier.

In particular, the system 100 includes a controller 120. In an example, the controller 120 can control the relative movement of the ablation point 112 to positions on the surface of the sample 102. For example, the controller 120 can control a linear stage translation table, such as platform 104, to move the sample 102 relative to a fixed beam 108. In another example, mirrors such as galvo mirrors, prisms, or lenses can be used to alter the relative position of the ablation point on a fixed sample. The controller 120 can control the relative movement of the ablation point 112 to positions on the surface of the sample 102 sequentially along an arc path. From the collection of the emission spectrum at each position on the surface of the sample 102, it is possible to construct a compositional map of the scanned surface.

The controller 120 can further control the timing of the laser 106 to ablate material only at the desired positions on the sample surface. Further, the controller 120 can control the collection system, such as the spectrometer 118, to collect the emission spectrum at a time delayed from the activation of the laser 106.

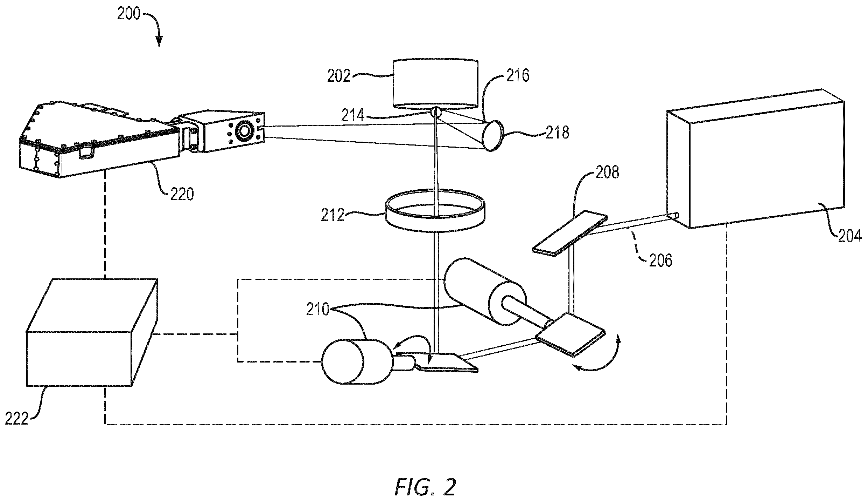

In another example, FIG. 2 illustrates schematically a system 200 for performing compositional analysis. The system 200 includes electromagnetic energy source 204 that emits an electromagnetic energy beam 206. A set of one or more fixed mirrors 208 and movable positioning mirrors, such as galvo mirrors 210, can direct the electromagnetic energy beam through lens 212 to ablation point 214 on the surface of the sample 202. In an example, the mirrors 210, which are motor driven, can be adjusted automatically to guide the ablation point to positions disposed sequentially along an arc path on the surface of the sample 202. Lens 212 can be a spherical lens, flat field scanning lens, or an F-Theta scanning lens. In an example, the lens 212 is a flat field scanning lens or an F-Theta scanning lens. In particular, the lens 212 is an F-Theta scanning lens.

When material is ablated by the electromagnetic energy beam 206 at ablation point 214, an emission spectrum 216 is evolved. The emission spectrum 216 can be directed by one or more mirrors 218 to a spectrometer 220.

In an example, the electromagnetic energy source 204 is a laser. In an example, the energy source in 204 can be a pulsed laser having a typical wavelength in a range of 200 nm to 1100 nm, such as 1064 nm, 532 nm, or 266 nm. Further, the energy source can have a peak power in a range of 0.5 MW/cm$^2$ to 2 GW/cm$^2$, such as at least 1 MW/cm$^2$, sufficient for ablating material from a surface of a sample and to probe elemental composition. For example, the laser pulses can have an energy in a range of 100 μJ-100 mJ and a pulse width in the femtosecond, picosecond, or nanosecond regime with a pulse repetition rate of up to the MHz regime. The laser may be a mode-locked or Q-switched laser. For example, the laser may be a passive Q-switched or an active Q-switched laser.

The spectrometer 220 can include various optical components such as one or more mirrors, lenses, apertures, gratings, prisms, and emission collection apparatuses. In an example, the emission collection apparatus is a solid state device, for example, a charge coupled device (CCD) imaging apparatus. In other examples, other emission detectors can be employed, such as a photomultiplier.

The system 200 can include a controller 222. In an example, the controller 222 controls the adjustable mirrors 210 to adjust the position on the surface of the sample 202 at which the ablation point 214 is located. In particular, the controller 222 is configured to move the ablation point to positions disposed sequentially along an arc path, for example by controlling motors that drive the adjustable mirrors 210. Further, the controller 222 can control the activation of the energy source 204 and can control the time at which the spectrometer 220 collects or analyzes emission spectra.

The controller 222 or 120 can comprise a computer (not shown): for example, comprising a storage medium, a memory, a processor, one or more interfaces, such as a user output interface, a user input interface, and a network interface, which are linked together. The storage medium may be any form of non-volatile data storage device such as one or more of a hard disk drive, a magnetic disc, an optical disc, a ROM, etc. The storage medium may store one or more computer programs for causing the controller 222 to adjust the position on the surface of the sample 202 at which the ablation point 214 is located. The memory may be any random-access memory suitable for storing data or computer programs. The processor may be any processing unit suitable for executing one or more computer programs (such as those stored on the storage medium or in the memory). The processor may comprise a single processing unit or multiple processing units operating in parallel, separately or in cooperation with each other. The processor, in carrying out processing operations, may store data to or read data from the storage medium or the memory. An interface may be provided that is any unit for providing an interface between the computer and the movable mirrors 210 and the energy source 204. A user input interface may be arranged to receive input from a user, or operator. The user may provide this input via one or more input devices of the controller, such as a mouse (or other pointing device) or a keyboard, that are connected to, or in communication with, the user input interface. However, it will be appreciated that the user may provide input to the computer via one or more additional or alternative input devices (such as a touch screen). The computer may store the input received from the input devices via the user input interface in the memory for the processor to subsequently access and process, or may pass it straight to the processor, so that the processor can respond to the user input accordingly. A user output interface may be arranged to provide a graphical/visual output to a user, or operator. For example, the emission spectrum collected from the sample may be provided as a graphical/visual output to a user, or operator. As such, the processor may be arranged to instruct the user output interface to form an image/video signal representing a desired graphical output, and to provide this signal to a video display unit (VDU) such as a monitor (or screen or display unit) that is connected to the user output interface. It will be appreciated that the computer architecture described above is merely exemplary and that other computer systems with different architectures (for example with fewer components or with additional or alternative components) may be used. As examples, the computer could comprise one or more of: a personal computer; a server computer; a laptop; etc.

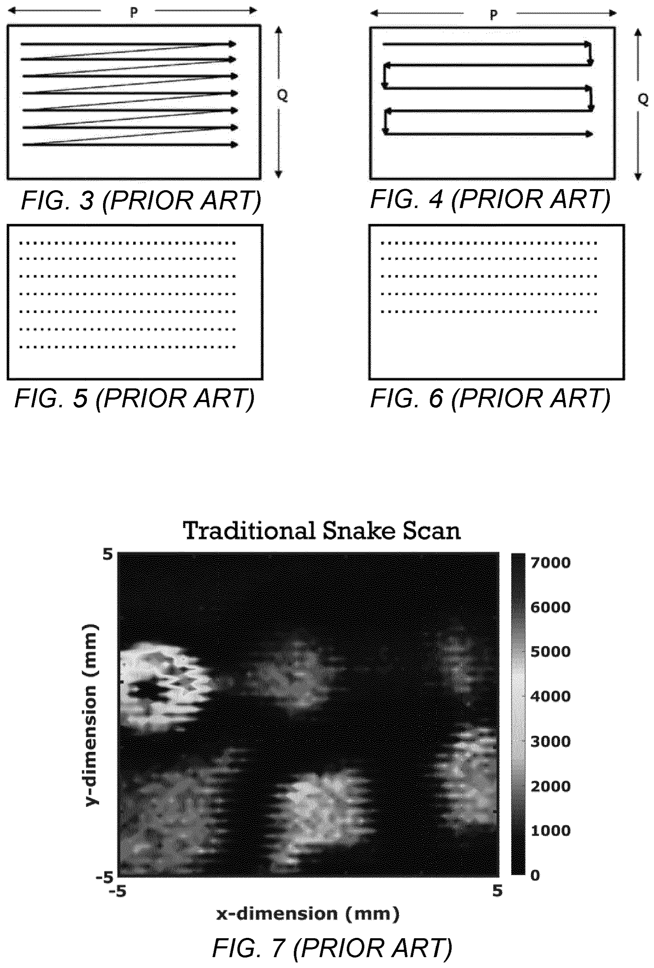

FIG. 3 and FIG. 4 illustrate conventional scanning patterns. For example, FIG. 3 illustrates a conventional raster scanning pattern. FIG. 4 illustrates a conventional snake scanning pattern. FIG. 5 and FIG. 6 illustrate a distribution of positions, such as a grid or array of positions, at which ablation is to take place for the conventional raster and snake scanning patterns. These conventional scanning patterns are based on dividing the image into horizontal strips, also known as scan lines. Each scan line can then be divided into a set of discrete positions to be used as ablation points, where each point represents the position of a single ablation. In the illustrated examples of FIG. 5 and FIG. 6, the positions are distributed at regular intervals. It has been discovered that such conventional scanning methods or patterns illustrated in FIG. 3 and FIG. 4 result in artifacts in positionally-resolved composition images and result in questionable average compositions when averaging across the grid or array of positions. As such, conventional scanning methods problematically introduce errors into measurements of evenly distributed positions on the surface of a sample, particularly when the scanning pattern causes the laser to scan mainly in a single direction. Another problem can arise from sampling of the surface beyond the boundaries of the area under investigation at the end of each scan line that is caused by the inertial properties of either the galvos or the linear stage as the galvos or the linear stages cannot be abruptly stopped and can move beyond the end of each scan line.

To illustrate the artifacts caused by conventional scanning methods, a printed circuit board (PCB) is tested for the presence of elemental nickel on a surface using laser-induced breakdown spectroscopy utilizing different scanning patterns. A 532 nm laser with 2 mJ per pulse energy and a repetition rate of 1 kHz is used for each scanning pattern. The laser has 2 MW power per pulse and a beam width of 4 mm, providing 16 MW/cm$^2$. As illustrated in FIG. 7, the snake scan method generates artifacts, such as smudges or additional traces or blurring effects. The snake scan utilizes a fast scanning in the X-direction using one galvo mirror. A second galvo mirror is varied with one discrete step at the end of each row in the Y-dimension after a line has been scanned. The laser scan is therefore focused in a single direction, which causes strong material transportation effects as the laser scans over the sample surface.

In contrast, it has been discovered that scanning along an arc path to move the ablation point sequentially to positions along the arc path permits collection of emission spectrum free of the artifacts associated with conventional scanning methods. For example, an arc path can be defined by a plurality of arcs where the path follows adjacent arcs in different or opposite directions along the adjacent arcs. In an example, the arcs can have a common center point (i.e., the same center point) and distributed at different radii. In another example, the arcs can have two common foci (i.e., the same foci). It is believed that during conventional scanning methods, the ejected material follows the linear path to subsequent ablation points, whereas during an arc path scanning methods, the ejected material moves tangential to the arc, limiting reanalysis of the same material and thus limiting blurring or smudging artifacts.

An arc path includes a plurality of arcs. A scan through the arc path includes moving sequentially through adjacent positions along an arc followed by moving to an adjacent arc and moving sequentially through the adjacent positions along the adjacent arc. In an example, the scan of one arc is in a first angular direction, while the scan of an adjacent arc is in an opposite angular direction. In a particular example, scans of consecutive arcs alternate in the angular directions. Alternatively, the scan through arcs can be in the same angular direction.

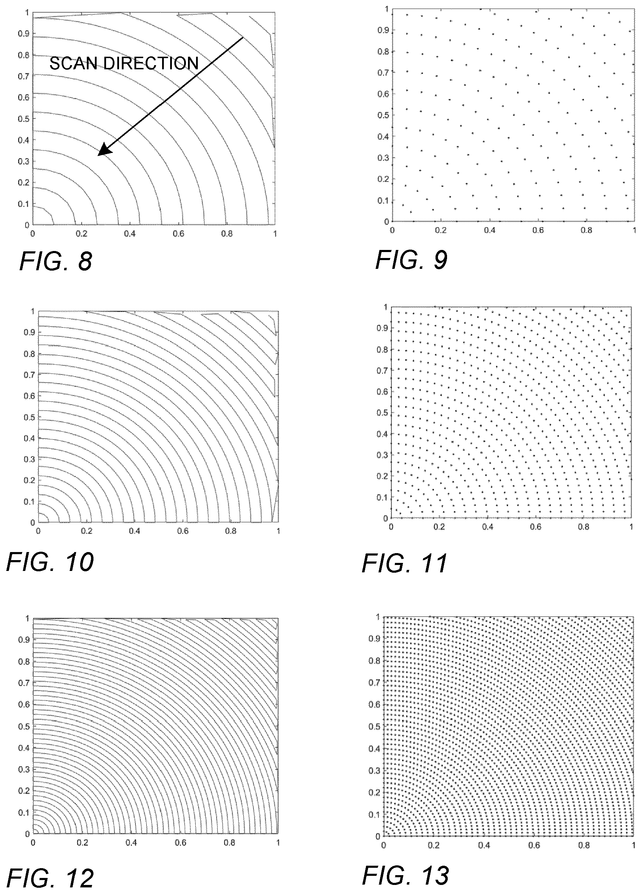

In an example, the arcs are located at different radii and have a common center point, i.e., the same center point. The arcs extend from an edge to another edge of the surface. For example, FIG. 8 illustrates a surface over which an arc path is defined. The arcs can be distributed at equal differences in radii.

In an example of circular arcs, a maximum radius can be identified to extend across a selected surface and arcs can be spaced at equal distances from one another along the radius. For example, a number of arcs can be selected, and the maximum radius can be divided by the number of arcs to determine a spacing of the arcs.

In an example of an elliptic coordinate system in which $\mu$ is a non-negative real number and $\upsilon$ ranges from 0 to $2\pi$, the arcs can be formed by holding $\mu$ constant and varying $\upsilon$ to form the arc. The arcs can be distributed at equal differences in $\mu$. In other examples, other coordinate systems, such as biangular coordinate, hyperbolic coordinates, among others can be used to define the plurality of arcs. Further, each arc may be the same and spaced with equal distances across a surface.

The arc path can include moving across one arc, moving to an adjacent arc, and moving across the adjacent arc. Once the ablation point has been moved across an arc and has reached the end of the arc at an angular boundary of the arc (typically at an edge of the surface area), the ablation point can be moved to the beginning of the adjacent arc to begin moving across that arc. In an example where the ablation point moves in opposite angular directions across adjacent arcs, the ablation point can be moved from the end of an arc along an edge of the surface area to the beginning of the subsequent arc. Thus, the ablation point moves from edge-to-edge across the arc.

The arc path can begin with the arc furthest from the center point or foci and move sequentially to adjacent arc closer to the center point or foci, as illustrated in FIG. 8. For example, as illustrated in Equation 1 below, an arc path composed of segments of a circle can be defined as a sinusoidal function where the boundary is generally at $\theta$ greater than 0 and less than $\pi/2$ and set depending on where the arc touches edges of the surface area. The radius of each subsequent arc is incrementally less than the radius of the previous arc. Any ejected material likely moves tangential to the arc, limiting reanalysis of the same material. Alternatively, the arc path can begin with the arc closest to the center point and move sequentially to adjacent arcs having greater radius.

$$(\text{Eq. 1}) \quad [x; y] = [r \cos \theta; r \sin \theta], \text{ where } \theta_{Edge\ 1} \leq \theta \leq \theta_{Edge\ 2} \text{ and}$$

$$r = r_{max} - step\_num * \frac{r_{max}}{Step\_num_{max}}$$

where r is the radius, $r_{max}$ is a maximum radius, step_num is the number of a step having a maximum step_num$_{max}$, and $\theta$ is the angle having a value $\theta_{Edge1}$ at a first edge and $\theta_{Edge2}$ at a second edge of the surface.

Arcs can be defined to have other shapes and in other coordinate systems, such as elliptical shapes in a biangular coordinate system or an elliptic coordinate system. In an elliptic coordinate system, the arc paths can be segments of ellipses. For example, as illustrated in Equation 2, the arc path can be defined using elliptic coordinates.

$$(\text{Eq. 2}) \quad [x, y] = [a \cosh \mu \cos \vartheta, a \sinh \mu \sin \vartheta]$$

where a is a constant, $\mu$ is a non-negative real number and $\upsilon$ ranges from $\upsilon_{Edge1}$ at a first edge to $\upsilon_{Edge1}$ at a second edge of the surface. Each arc can be a segment of an ellipse defined when the value of $\mu$ is held constant. The plurality of arcs can be defined by segments of ellipses having equal differences in $\mu$.

To further define the arc path, positions are designated along each arc. For example, FIG. 9 illustrates positions distributed along the arc path of FIG. 8. In an example, the positions can be distributed to be equidistant from one another along the arc. For example, the positions can be linearly equidistant (e.g., Eq. 3). In another example, the positions can be equidistant along the arc (e.g., Eq. 4)

$$(\text{Eq. 2}) \ \overline{\Delta l} = \sqrt{[x(t_2) - x(t_1)]^2 + [y(t_2) - y(t_1)]^2}$$

$$(\text{Eq. 3}) \ \widehat{\Delta l} = \int_{t_1}^{t_2} \sqrt{\left(\frac{d}{dt} x(t)\right)^2 + \left(\frac{d}{dt} y(t)\right)^2} \, dt$$

where x and y are expressed as function of time in which the ablation point is at a first position at $t_1$ and is at an adjacent position at $t_2$. And, $\Delta l$ is the distance between positions, either along a straight line ($\overline{\Delta l}$) or along the arc ($\widehat{\Delta l}$).

To designate a sampling density or number of sampling positions and thus, a density or number of ablation points, the number of arcs or spacing of arcs can be selected or the distance between positions along an arc can be selected. Alternatively, the system can determine a number of arcs and spacing between adjacent points based on a desired density.

For example, as illustrated in FIG. 10, FIG. 11, FIG. 12, and FIG. 13, increasing the number of arcs and decreasing the distance between positions on an arc increases the density of positions and thus, ablation points at which measurements can be taken. An increase in the density of positions may provide an increase in the spatial resolution of an image of the composition.

Optionally, the arcs can be spaced and positions distributed along the arcs to form a grid or array of positions distributed evenly across a surface. In an example, the position on an arc is an equal distance from another position on the arc and a further position on an adjacent arc. For example, the positions can form a grid or array in a polar coordinate system. In an example, the positions are disposed equidistant along an arc and equidistant along a radius. A position can be equidistant from adjacent positions within the arc and from adjacent positions along a radius from the center point. In another example, the positions can form a grid or array in a biangular coordinate system or an elliptic coordinate system.

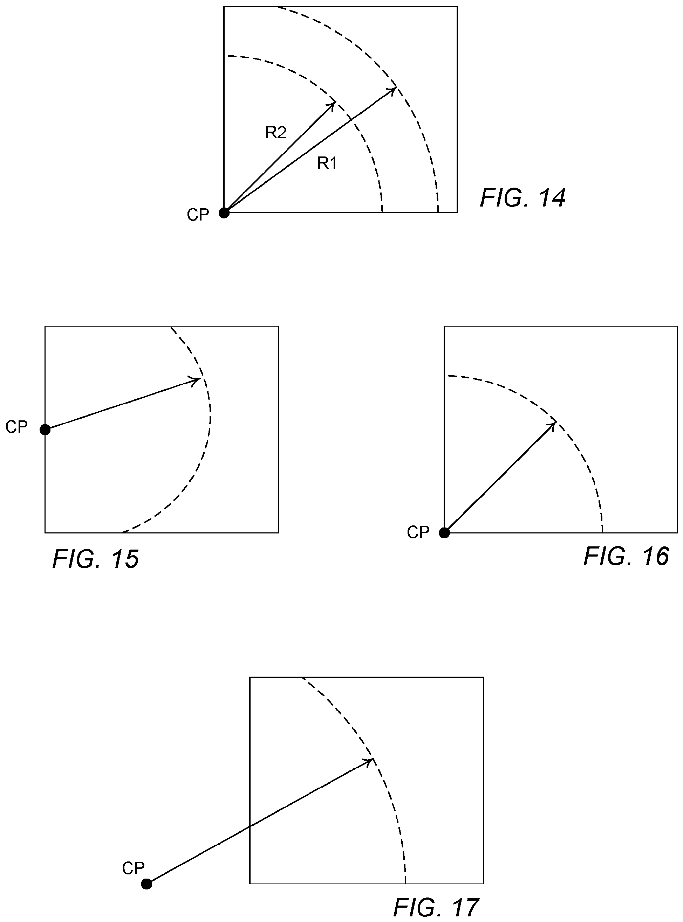

As illustrated in FIG. 14, adjacent arcs are positioned at different radial distances (R1 or R2) from the same center point (CP). The adjacent arcs may have a radius of curvature equal to the distance from the center point. In an example, an arc path can scan in a first angular direction along the arc at radius R1 and then scan in an opposite angular direction along the arc at radius R2. Alternatively, the arc path can scan the arc at radius R2 before the arc at radius R1. In a further alternative example, the arc path can scan both arcs in the same angular direction.

As illustrated in FIG. 14, the center point is disposed in a corner of a surface. In an example, the center point (CP) can be disposed at an edge of the surface, as illustrated in FIG. 15. In another example, the center point (CP) can be disposed at the intersection of two edges (e.g., a corner) of the surface, as illustrated in FIG. 16. In a further example illustrated in FIG. 17, the center point (CP) can be disposed outside of the bounds of the surface. Alternatively, the center point (CP) can be disposed on or within the bounds of the surface. Depending on the shape of the bounds of the surface different positions of the center point (CP) may provide advantages over other optional positions of the center point (CP).

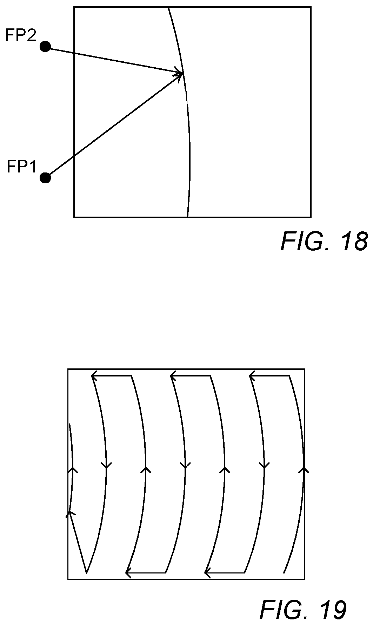

In another example illustrated in FIG. 18, each arc of the plurality of arcs can have two common foci (i.e., the same two foci). For example, the arcs may be segments of ellipses. Such segments of ellipse may define arc paths along which positions are distributed for ablation points. Such arcs can be defined in an elliptic coordinate system or a biangular coordinate system. The foci can be disposed at an edge of the surface area. In another example, the foci can be disposed at different edges of the surface area. In a further example, the foci can be disposed at different corners of the surface area. In an addition example, the foci can be disposed outside of the surface area.

In an additional example, each arc can have the same shape and be distributed evenly across the surface, as illustrated in FIG. 19. In general, the arcs have a non-zero (e.g., a point) and non-infinite (e.g., a straight line) radius of curvature. The radius of curvature can vary across an arc, for example, when the arc is a segment of an ellipse or other non-circular curve.

In an example, each of the arcs has a concave side that faces toward the end point of a scan and has a convex side facing away from the end point and toward the beginning of the scan. As referred to herein, the curves are concave in the direction of scanning.

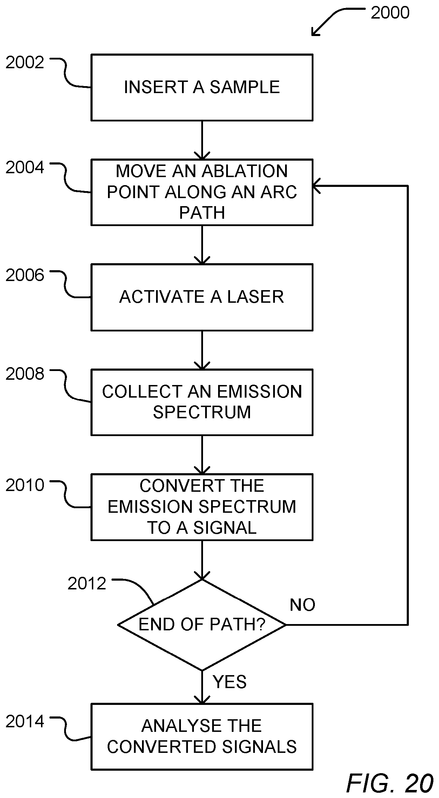

FIG. 20 includes an illustration of an example method 2000 for performing compositional analysis. For example, the method includes inserting a sample into compositional analysis system, as illustrated at block 2002. In general, the sample has a surface at which material is to be ablated to evolve an emission spectrum that can be used for compositional analysis.

As illustrated at block 2004, the system can move an ablation point to sequential positions along an arc path. The ablation point can be positioned in various positions along the arc path. The configuration of the arc path (e.g., position of center point, distance between arcs, angular boundaries of the arcs, distance between points on the arc, etc.) can be selected to provide a desired sample density across the surface.

At select intervals, the energy source, such as a laser, can be activated, as illustrated at block 2006. For example, the laser can be activated at a rate in a range of 1 Hz to several MHz, such as 100 Hz to 1000 Hz. When activated, material is ablated from the surface at the ablation point, facilitating the evolution of an emission spectrum.

The ablation point can be moved sequentially between positions along the arc path by moving the sample relative to the fixed electromagnetic energy beam, for example, with a linear stage platform. In another example, the ablation point can be moved by changing the path of an energy beam relative to a fixed sample surface, such as through the use of the adjustable or movable lenses, prisms, or mirrors, e.g., galvo mirrors.

As illustrated at block 2008, the emission spectrum can be collected. For example, an optical system, such as a set of collection lenses can be used to collect an emission spectrum emanating from the ablation point. The emission spectrum can be provided optically to a spectrometer that collects and converts the emission spectrum into a digital signal, as illustrated at block 2010. The digital signal can indicate intensities of light received at various wavelengths, which can be used to determine the composition.

As illustrated in block 2012, the system determines whether the end of the arc path has been reached. If not, the system moves the ablation point to a subsequent position along the arc path, as illustrated at block 2004, activates the energy source, collects an emission spectrum, and converts the emission spectrum to a signal.

As illustrated at block 2014, the system can analyze the converted or digital signals to determine composition qualitatively and optionally quantitatively. In an example, the analysis can be performed after the measurements are taken across each of the ablation points. Alternatively, analysis can be performed concurrently with the measurements of emission spectra. The analysis can result in an averaging of compositions across the positions along the arc path. In another example, analysis can provide a positionally-resolved image or map indicative of composition at various positions at the surface of the sample. Analysis may be performed by a computer associated with the spectrometer. In some embodiments, the computer for performing analysis may be the computer of the controller 222 in FIG. 2 described above.

Depending upon the nature of the desired analysis, the resolution of an image indicative of composition, or other factors, the number of measurement positions or the density of measurement positions across a select sample area can be adjusted. The nature of the arc path allows the adjustment of density or number of measurement positions by altering the position of the center point or foci, the number of arcs, the separation between arcs, and the distance between positions along the arcs.

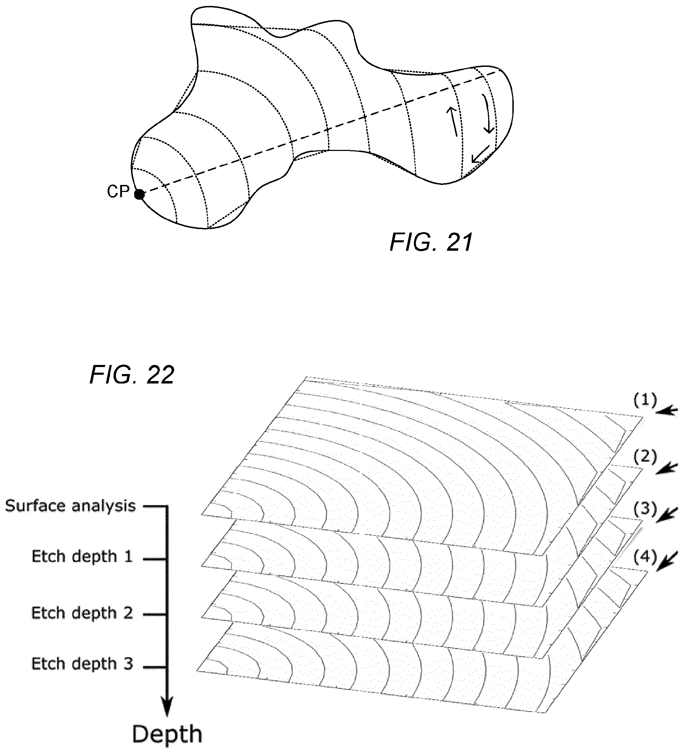

Different shapes of test areas can be covered using various arc paths. For example, FIGs. 8-13 illustrate an arc path configured for a square surface area. Similar arc paths can be used to test rectangular shapes. Arc paths can be envisaged to test regular shapes, such as squares, rectangles, other parallelograms, other quadrilateral shapes, such as trapezoids or kites, other polygons, and combinations or concatenations thereof. Further, arc paths can be used to test irregular shapes. For example, FIG. 21 illustrates an example 2-D surface having an irregular shape and an associated arc path useful for testing a surface having such an irregular shape. A center point can be selected that has a radial vector extending through the surface. The center point can be positioned on an edge or outside the boundaries of the surface.

Arc paths can further be used to test the same area at different depths. For example, the same positions, such as within a pattern of positions, can be tested more than once to reach subsurface depths. A first arc pattern scan by the laser analyses the surface of the sample and each successive arc pattern scan etches into the sample to an additional depth. By continuing this process, multiple layers can be analysed as a function of depth. By assembling the analyses of these layers in three dimensions, the system can produce a three-dimensional map, that is, the composition of the sample can be analysed in three dimensions. In an example, FIG. 22 includes an illustration utilizing an arc pattern generated from an arc path over the same test area to test composition as a function of depth. In the illustrated example, a surface analysis is performed at test (1) using a first arc path through the array of test positions. Additional arc paths can be used at each of the tests (2), (3), or (4), etc., to test composition at etch depths 1, 2, or 3, etc. In the example illustrated in FIG. 20, the same arc path can be used in each of the subsequent tests (2), (3), or (4) to test composition at different depths at the same test points. In an alternative example, a different arc path can be utilized at one or more of the additional tests, providing that the arc path passes through the same pattern of measurement positions. The scan direction of the laser along the arc path can be the same for each test depth 1, 2, 3 etc., or can be different between test depths. In one example, at a first test depth, the laser moves along the arc path in a first direction, and at a second test depth, the laser moves along the arc path in a second or opposite direction, the laser moving through the same array of measurement positions regardless of the scan direction.

Generally, when a test area is selected, a variety of geometries, arc patterns, and arc distributions, can be utilized to define an arc path across the test area. In particular, the geometries can include the concatenation of arc patterns, adjustment of step size and different dimensions, or subsequent tracing across previously tested points to generate measurements of composition as a function of depth. Further, selecting a density of positions, distance between arcs, distance between positions, position of the common center point or foci, and other factors defines the number or density of measurement positions within a grid or array (e.g., a 2-D array in a polar coordinate system or elliptic coordinate system) within the portion of the test area.

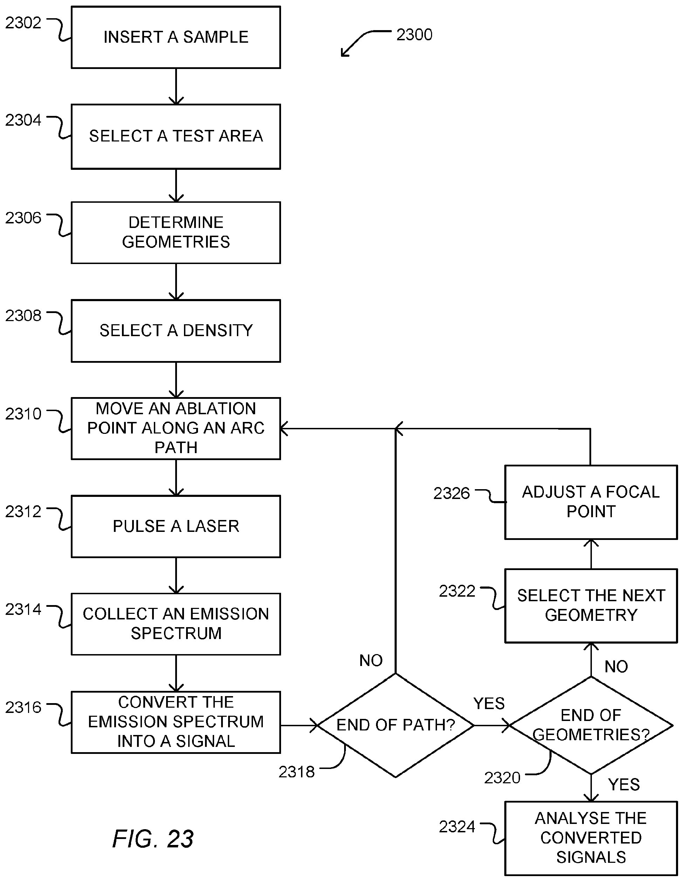

In an example illustrated in FIG. 23, a method 2300 for performing compositional analysis includes inserting a sample into the test system, as illustrated at block 2302. The sample includes a surface that is to be tested for composition. For example, the sample may be a metal, semiconductor, polymer, glass, ceramic, or mineral sample.

As illustrated at block 2304, a test area can be selected on the surface of the inserted sample. In an example, the test area is a square area. Alternatively, the test area can take a rectangular shape or another geometric shape as described above. For example, the geometry can take the form of an irregular shape.

Depending on the nature and shape of the test area, the system can determine the geometries to be utilized in defining an arc path through the measurement positions defined within the test area, as illustrated at block 2306. For example, defining the geometries can include defining a concatenation of various arc patterns, adjusting step sizes of between arcs, selecting a common center point or foci, determination of angular boundaries of arcs, or selecting arc patterns over measurement positions that are to be tested more than once.

The method can further include defining the density of a grid or array of measurement positions by selecting factors, such as step sizes between arc or distances between positions, that provides the desired density of the array of measurement positions, as illustrated at block 2308. Smaller step sizes and distances between points provides a greater number of measurement positions within an array and a higher density of measurement positions for a given area. Alternatively, a density can be selected, and the system can determine an arc pattern or distance between positions that achieves the selected density.

Once the geometries are selected, an arc path is defined along which measurements can take place. For example, as illustrated at block 2310, an ablation point can be moved to sequential positions along the arc path within a grid or array of measurement positions (e.g., a 2-D array or grid in polar coordinates). At the desired position, an energy source, such as a laser, can be pulsed, as illustrated at block 2312. The pulse results in the ablation of material at the ablation point or position on the surface of the sample causing the evolution of emission spectrum.

As illustrated at block 2314, the emission spectrum can be collected, such as using a collection lens or other optical system. The collected emission spectrum can be converted to a digital signal, for example, utilizing a spectrometer, as illustrated at block 2316.

Following the collection of the emission spectrum, the system can determine whether the end of an arc path along a select geometry has been reached, as illustrated at block 2318. If not, the system can move the ablation point to a subsequent position along the arc path and repeat the pulsing of the laser and collection of emission spectrum.

If the end of the path is reached, the system can determine whether the end of the geometries has been reached, as illustrated at block 2320. For example, the system can determine whether all of the depths have been tested or whether there are additional arc patterns to be tested. If the end of the geometries is not reached, the system can then select the next geometry, as illustrated at block 2322.

Depending on the nature of the geometry, the system can reset the focal point of the energy source, such as the laser, as illustrated at block 2326. For example, when testing additional depths, the focal point can be adjusted for the next depth. The system can then move the ablation point along sequential positions in the arc path, pulse the laser, and collect emission spectrum at each position.

The system can analyze the converted signals to determine composition, as illustrated at block 2324. For example, the system can average composition at the positions to determine an average across the surface test area. In another example, the system can provide positionally resolved maps or images indicating compositions at different positions.

Embodiments of the above system and methods provide technical advantages over conventional systems. In particular, embodiments overcome the problem of a material transport effect observed in conventional systems and testing methods, reducing errors and the appearance of artifacts, such as blurring or smearing, in positionally-resolved maps indicating composition as a function of position. Such errors are also reduced when compositions collected from a set of positions are averaged. High accuracy is enabled in positionally-resolved maps as the galvo mirrors (or linear stage) movements are minimized. Also, the durable lifetime of components of the system increases because the number of abrupt directions changes for galvo mirrors (or linear stages) is limited.

EXAMPLES

EXAMPLE 1

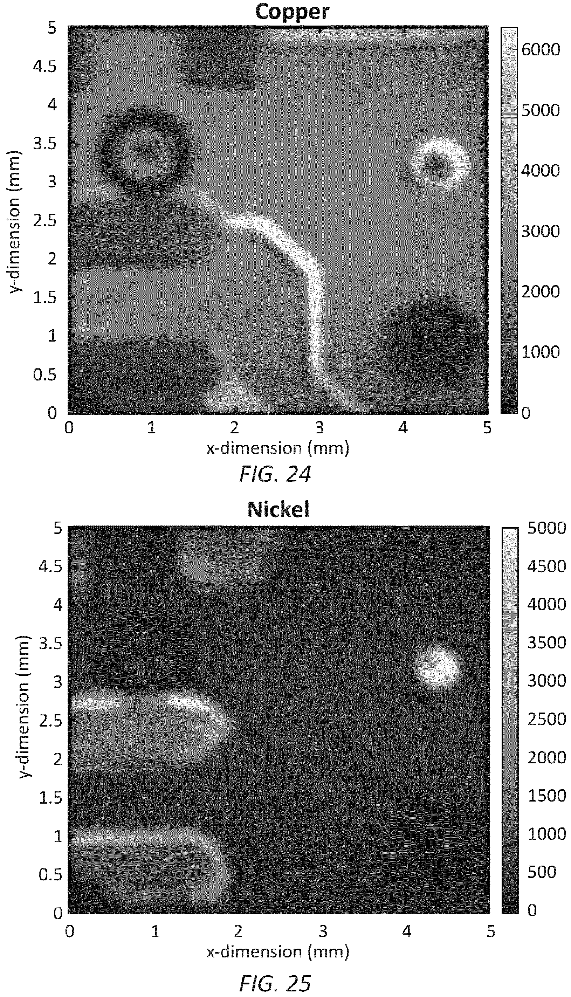

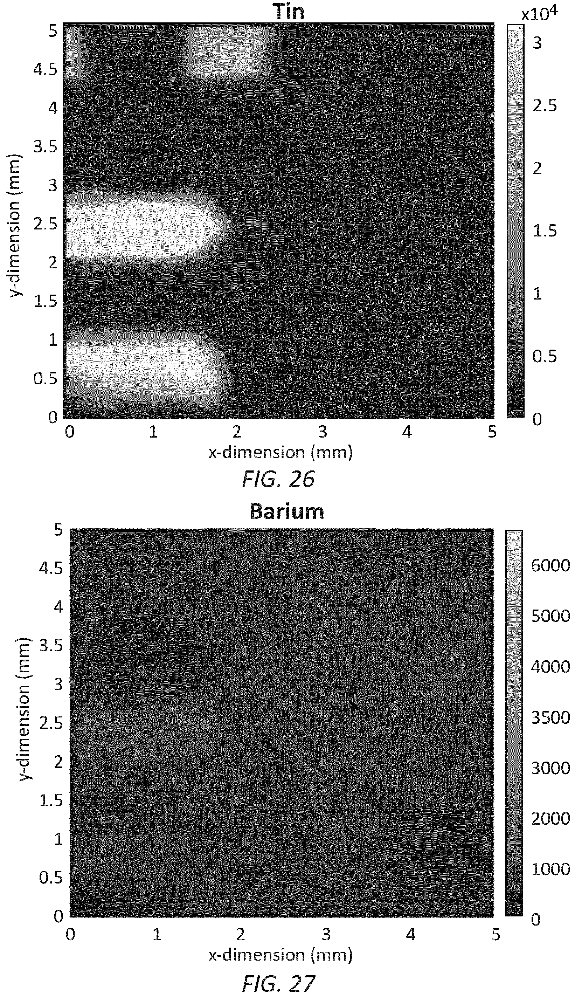

A printed circuit board (PCB) is tested for the presence of elemental copper, nickel, tin, and barium on a surface of the PCB. The same area of the PCB is tested using laser-induced breakdown spectroscopy utilizing an arc path. A 532 nm laser with 2 mJ per pulse energy and a repetition rate of 1 kHz is used for the scanning pattern. The laser has 2 MW power per pulse and a beam width of 4 mm, providing 16 MW/cm$^2$. FIG. 24 (copper), FIG. 25 (nickel), FIG. 26 (tin), and FIG. 27 (barium) illustrate positionally-resolved maps of composition measured utilizing an arc path.

As illustrated in FIGs. 24-27, utilizing an arc path provides an image that is accurate and visually sharp, in contrast to the smudges or blurring artifacts illustrated in FIG. 7. The arcs possess a concave curvature with respect to the direction of scanning, which may cause the ejected material to be outside of successive scanning areas, thus avoiding re-analysing ablated material. For example, as the laser scans along the arc paths the ejected material experiences a centripetal force that pushes it normal to the arc curve function. Furthermore, any remaining material ejected tangentially with the respect to the scanning direction is not superimposed over successive ablation positions. The curvature of the arc path maps to a next spot on the grid away from the tangent and therefore away from matter superposition.

EXAMPLE 2

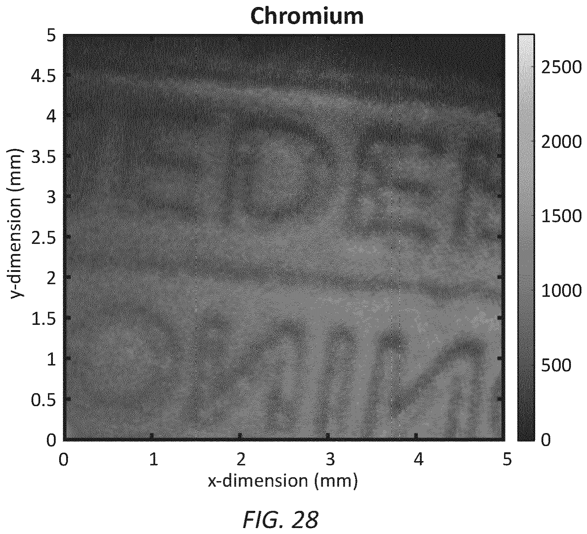

A two-Euro coin is tested for the presence of elemental chromium using laser-induced breakdown spectroscopy utilizing an arc path. A 532 nm laser with 2 mJ per pulse energy and a repetition rate of 1 kHz is used for the scanning pattern. The laser has 2 MW power per pulse and a beam width of 4 mm, providing 16 MW/cm$^2$. FIG. 28 illustrates a positionally-resolved map of composition (chromium) measured utilizing an arc path.

As is illustrated in FIG. 28, the chemical mapping distinguishes between the elements used to coat the letters and the substrate in the immediate surrounds. As a result, each letter possess sharp boundaries, revealing little-to-no mass transportation effects after ablation that would otherwise lead to blurring or smudging artifacts.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

After reading the specification, skilled artisans will appreciate that certain features are, for clarity, described herein in the context of separate embodiments, may also be provided in combination in a single embodiment. Conversely, various features that are, for brevity, described in the context of a single embodiment, may also be provided separately or in any subcombination. Further, references to values stated in ranges include each and every value within that range. The invention is only limited by the appended claims.

## Claims

1. A method for laser-induced breakdown spectroscopy, the method comprising:

   providing a sample (102) having a surface containing an area to be analyzed;
   moving an ablation point (112) to a position of a plurality of positions on the surface along an arc path defined by a plurality of arcs, wherein the plurality of arcs extend from an edge of the area to another edge of the area and each arc is concave in a direction of scanning, wherein the arc path follows adjacent arcs of the plurality of arcs;
   pulsing an energy source (106) to provide an electromagnetic energy beam (108) to ablate material at the ablation point (112);
   collecting an emission spectrum in response to pulsing the energy source (106); and
   analyzing the emission spectrum to determine a composition at the surface.

2. The method of claim 1, further comprising moving the ablation point (112) to a second position on the surface along the path, the second position adjacent the first position along the path.

3. The method of claim 1 or claim 2, wherein moving the ablation point (112) includes moving the sample (102) using a translation plate (104) or includes positioning mirrors (210).

4. The method of any one of claims 1-3, wherein the energy source (106) includes a laser.

5. The method of any one of claims 1-4, wherein the arc path follows adjacent arcs of the plurality of arcs in different angular directions along the adjacent arcs.

6. The method of any one of claims 1-5, wherein the plurality of arcs have a common center point and are distributed at different radii.

7. The method of claim 6, wherein the common center point is disposed at an edge of the surface or is disposed at an intersection of two edges of the surface or is disposed outside of the bounds of the surface.

8. The method of claim 6, wherein moving the ablation point (112) includes successively scanning arcs of the plurality of arcs in a direction towards the common center point.

9. The method of claim 6, wherein each arc of the plurality of arcs is distributed equidistant from an adjacent arc along a radial direction from the common center point.

10. The method of any one of claims 1-5, wherein the plurality of arcs have two common foci and wherein moving the ablation point includes successively scanning arcs of the plurality of arcs in a direction towards the common foci.

11. The method of claim 10, wherein each arc of the plurality of arcs is distributed equidistant from an adjacent arc along a direction from the common foci.

12. The method of any one of claims 1-11, wherein each position of the plurality of positions within an arc of the plurality of arcs is distributed to be linearly equidistant or wherein each position of the plurality of positions within an arc of the plurality of arcs is distributed to be equidistant along the arc.

13. The method of any one of claims 1-12, wherein the position on an arc of the plurality of arcs is an equal distance from another position on the arc of the plurality of arcs and a further position on an adjacent arc of the plurality of arcs.

14. The method of any one of claims 1-13, further comprising selecting a sampling density and determining a number of arcs defining the plurality of arcs based at least in part on the selected sampling density.

15. The method of any one of claims 1-14, wherein analyzing includes determining a composition at the position and averaging the composition with other compositions determined at other positions of the plurality of positions or wherein analyzing includes determining a composition at the position and producing a positionally-resolved image including the composition displayed at a relative position with other compositions displayed at other relative positions.

16. A system for laser-induced breakdown spectroscopy comprising:

an energy source (106, 204) to provide an energy beam (108, 206)
a positioning mechanism (104, 210) to position relatively a surface of a sample (102, 202) and the energy beam (108, 206) to provide an ablation point (112, 214) at a position of a plurality of positions on the surface, the surface containing an area to be analyzed;
a collection lens (116) directed to collect an emission spectrum from the ablation point (112, 214);
a spectrometer (118, 220) in optical communication with collection lens (116); and
a controller (120, 222) in communication with the positioning mechanism (104, 210), wherein the controller is configured to direct movement of the ablation point on the surface to the plurality of positions along an arc path defined by a plurality of arcs extending from an edge of the area to another edge of the area and each arc is concave in a direction of scanning.

**Patentansprüche**

1.  Verfahren zur laserinduzierten Plasmaspektroskopie, wobei das Verfahren Folgendes umfasst:

    Bereitstellung einer Probe (102) mit einer Oberfläche, die einen zu analysierenden Bereich aufweist;
    Bewegen eines Ablationspunkts (112) zu einer Position aus einer Vielzahl von Positionen auf der Oberfläche entlang eines Bogenpfads, der durch eine Vielzahl von Bögen definiert ist, wobei sich die Vielzahl von Bögen von einem Rand des Bereichs zu einem anderen Rand des Bereichs erstreckt und jeder Bogen in einer Scanrichtung konkav ist, wobei der Bogenpfad benachbarten Bögen aus der Vielzahl von Bögen folgt;
    Pulsieren einer Energiequelle (106), um einen elektromagnetischen Energiestrahl (108) zur Ablation von Material am Ablationspunkt (122) bereitzustellen;
    Erfassen eines Emissionsspektrums als Reaktion auf das Pulsieren der Energiequelle (106); und
    Analysieren des Emissionsspektrums, um eine Zusammensetzung an der Oberfläche zu bestimmen.

2.  Verfahren nach Anspruch 1, ferner umfassend das Bewegen des Ablationspunkts (112) zu einer zweiten Position auf der Oberfläche entlang des Pfads, wobei die zweite Position an die erste Position entlang des Pfads angrenzt.

3.  Verfahren nach Anspruch 1 oder Anspruch 2, wobei das Bewegen des Ablationspunkts (112) das Bewegen der Probe (102) unter Verwendung einer Translationsplatte (104) umfasst oder das Positionieren von Spiegeln (210) umfasst.

4.  Verfahren nach einem der Ansprüche 1 bis 3, wobei die Energiequelle (106) einen Laser umfasst.

5.  Verfahren nach einem der Ansprüche 1 bis 4, wobei der Bogenpfad benachbarten Bögen aus der Vielzahl von Bögen in unterschiedlichen Winkelrichtungen entlang der benachbarten Bögen folgt.

6.  Verfahren nach einem der Ansprüche 1 bis 5, wobei die Vielzahl von Bögen einen gemeinsamen Mittelpunkt hat und in unterschiedlichen Radien verteilt ist.

7.  Verfahren nach Anspruch 6, wobei der gemeinsame Mittelpunkt an einem Rand der Oberfläche angeordnet ist oder an einem Schnittpunkt zweier Ränder der Oberfläche angeordnet ist oder außerhalb der Grenzen der Oberfläche angeordnet ist.

8.  Verfahren nach Anspruch 6, wobei das Bewegen des Ablationspunkts (122) das sukzessive Scannen von Bögen aus der Vielzahl von Bögen in einer Richtung zu dem gemeinsamen Mittelpunkt hin umfasst.

9.  Verfahren nach Anspruch 6, wobei jeder Bogen aus der Vielzahl von Bögen in gleichem Abstand von einem benachbarten Bogen entlang einer radialen Richtung von dem gemeinsamen Mittelpunkt verteilt ist.

10. Verfahren nach einem der Ansprüche 1 bis 5, wobei die Vielzahl von Bögen zwei gemeinsame Brennpunkte hat und wobei das Bewegen des Ablationspunkts das sukzessive Scannen von Bögen aus der Vielzahl von Bögen in einer Richtung zu dem gemeinsamen Brennpunkt hin umfasst.

11. Verfahren nach Anspruch 10, wobei jeder Bogen aus der Vielzahl von Bögen in gleichem Abstand von einem benachbarten Bogen entlang einer Richtung von dem gemeinsamen Brennpunkt verteilt ist.

12. Verfahren nach einem der Ansprüche 1 bis 11, wobei jede Position aus der Vielzahl von Positionen innerhalb eines Bogens aus der Vielzahl von Bögen derart verteilt ist, dass sie linear den gleichen Abstand aufweist, oder wobei jede Position aus der Vielzahl von Positionen innerhalb eines Bogens aus der Vielzahl von Bögen derart verteilt ist, dass sie entlang des Bogens den gleichen Abstand aufweist.

13. Verfahren nach einem der Ansprüche 1 bis 12, wobei die Position auf einem Bogen aus der Vielzahl von Bögen einen gleichen Abstand von einer anderen Position auf dem Bogen aus der Vielzahl von Bögen und einer weiteren Position auf einem benachbarten Bogen aus der Vielzahl von Bögen aufweist.

**14.** Verfahren nach einem der Ansprüche 1 bis 13, ferner umfassend das Auswählen einer Abtastdichte und das Bestimmen einer Anzahl von Bögen, welche die Vielzahl von Bögen definieren, basierend zumindest teilweise auf der ausgewählten Abtastdichte.

**15.** Verfahren nach einem der Ansprüche 1 bis 14, wobei das Analysieren das Bestimmen einer Zusammensetzung an der Position und das Mitteln der Zusammensetzung mit anderen Zusammensetzungen umfasst, die an anderen Positionen aus der Vielzahl von Positionen bestimmt werden, oder wobei das Analysieren das Bestimmen einer Zusammensetzung an der Position und das Erzeugen eines positionsaufgelösten Bildes umfasst, das die an einer relativen Position angezeigte Zusammensetzung mit anderen Zusammensetzungen umfasst, die an anderen relativen Positionen angezeigt werden.

**16.** System für laserinduzierte Plasmaspektroskopie, umfassend:

eine Energiequelle (106, 204), um einen Energiestrahl (108, 206) bereitzustellen
einen Positionierungsmechanismus (104, 210) zum relativen Positionieren einer Oberfläche einer Probe (102, 202) und des Energiestrahls (108, 206), um einen Ablationspunkt (112, 214) an einer Position aus einer Vielzahl von Positionen auf der Oberfläche bereitzustellen, wobei die Oberfläche einen zu analysierenden Bereich enthält; eine Sammellinse (116), die von der Richtung her zum Sammeln eines Emissionsspektrums von dem Ablationspunkt (112, 214) angeordnet ist;
ein Spektrometer (118, 220) in optischer Kommunikation mit der Sammellinse (116); und
eine Steuerung (120, 222) in Kommunikation mit dem Positionierungsmechanismus (104, 210), wobei die Steuerung konfiguriert ist,
um die Bewegung des Ablationspunkts auf der Oberfläche zu der Vielzahl von Positionen entlang eines Bogenpfads zu lenken, der durch eine Vielzahl von Bögen definiert ist, die sich von einem Rand des Bereichs zu einem anderen Rand des Bereichs erstrecken, und jeder Bogen in einer Scanrichtung konkav ist.


**Revendications**

**1.** Procédé de spectroscopie d'émission optique de plasma induit par laser, le procédé comprenant :

la mise à disposition d'un échantillon (102) ayant une surface comprenant une zone à analyser ;
le déplacement d'un point d'ablation (112) vers une position parmi une série de positions sur la surface
le long d'un trajet d'arc défini par une série d'arcs, où la série d'arcs s'étendent depuis un bord de la zone vers un autre bord de la zone et chaque arc est concave dans une direction de balayage, où le trajet d'arc suit les arcs adjacents de la série d'arcs ;
l'impulsion d'une source d'énergie (106) pour fournir un faisceau d'énergie électromagnétique (108) pour retirer du matériau au point d'ablation (112) ;
la collecte d'un spectre d'émission en réponse à l'impulsion de la source d'énergie (106) ; et
l'analyse du spectre d'émission afin de déterminer la composition de la surface.

**2.** Procédé selon la revendication 1, comprenant en outre, le déplacement du point d'ablation (112) vers une deuxième position sur la surface le long du trajet, la deuxième position étant adjacente à la première position sur le trajet.

**3.** Procédé selon la revendication 1 ou la revendication 2, dans lequel le déplacement du point d'ablation (112) comprend le déplacement de l'échantillon (102) à l'aide d'une plaque de translation (104) ou comprend des miroirs de positionnement (210).

**4.** Procédé selon l'une quelconque des revendications 1 à 3, dans lequel la source d'énergie (106) comprend un laser.

**5.** Procédé selon l'une quelconque des revendications 1 à 4, dans lequel le trajet d'arc suit des arcs adjacents de la série d'arcs dans différentes directions angulaires le long des arcs adjacents.

**6.** Procédé selon l'une quelconque des revendications 1 à 5, dans lequel les arcs de la série ont un point central commun et sont distribués selon différents rayons.

**7.** Procédé selon la revendication 6, dans lequel le point central commun est placé sur un bord de la surface ou placé à l'intersection de deux bords de la surface ou est placé en dehors des limites de la surface.

**8.** Procédé selon la revendication 6, dans lequel le déplacement du point d'ablation (112) comprend le balayage successif des arcs de la série d'arcs dans une direction vers le point central commun.

**9.** Procédé selon la revendication 6, dans lequel chaque arc de la série d'arcs est équidistant d'un arc adjacent le long d'une direction radiale depuis le point central commun.

**10.** Procédé selon l'une quelconque des revendications 1 à 5, dans lequel la série d'arcs comprend deux foyers communs, et dans lequel le déplacement du point d'ablation comprend le balayage successif des arcs de la série d'arcs dans la direction des foyers communs.

**11.** Procédé selon la revendication 10, dans lequel chaque arc de la série d'arcs est équidistant d'un arc adjacent le long d'une direction radiale depuis les foyers communs.

**12.** Procédé selon l'une quelconque des revendications 1 à 11, dans lequel chaque position de la série de positions au sein d'un arc de la série d'arcs est distribuée de manière linéairement équidistante ou dans lequel chaque position de la série de positions au sein d'un arc de la série d'arcs est distribuée de manière équidistante le long de l'arc.

**13.** Procédé selon l'une quelconque des revendications 1 à 12, dans lequel la position sur un arc de la série d'arcs est à la même distance d'une autre position sur l'arc de la série d'arcs et d'une troisième position sur un arc adjacent de la série d'arcs.

**14.** Procédé selon l'une quelconque des revendications 1 à 13, comprenant en outre, la sélection d'une densité d'échantillonnage et la détermination d'un nombre d'arcs définissant la série d'arcs sur base au moins en partie, de la densité d'échantillonnage choisie.

**15.** Procédé selon l'une quelconque des revendications 1 à 14, dans lequel l'analyse comprend la détermination d'une composition en la position et la détermination de la composition moyenne avec les autres compositions déterminées en d'autres positions de la série de positions ou dans lequel l'analyse comprend la détermination d'une composition en la position et la production d'une image résolue en position comprenant la composition présentée à une position relative avec les autres compositions présentées en d'autres positions relatives.

**16.** Système de spectroscopie d'émission optique de plasma induit par laser, comprenant :

une source d'énergie (106, 204) pour fournir un faisceau d'énergie (108, 206)
un mécanisme de positionnement (104, 210) pour positionner par rapport à la surface d'un échantillon (102, 202) et au faisceau d'énergie (108, 206) afin de produire un point d'ablation (112, 214) en une position d'une série de positions sur la surface, la surface contenant une zone à analyser ; une
lentille de collecte (116) dirigée pour collecter un spectre d'émission depuis le point d'ablation (112, 214) ;
un spectromètre (118, 220) en communication optique avec la lentille de collecte (116), et
un contrôleur (120, 222) en communication avec le mécanisme de positionnement (104, 210), dans lequel le contrôleur est configuré
pour diriger le mouvement du point d'ablation sur la surface vers la série de positions le long d'un trajet d'arc défini par une série d'arcs s'étendant depuis un bord de la zone vers un autre bord de la zone et chaque arc est concave dans une direction de balayage.

*FIG. 1*

FIG. 2

FIG. 3 (PRIOR ART)

FIG. 4 (PRIOR ART)

FIG. 5 (PRIOR ART)

FIG. 6 (PRIOR ART)

## Traditional Snake Scan

FIG. 7 (PRIOR ART)

FIG. 8

FIG. 9

FIG. 10

FIG. 11

FIG. 12

FIG. 13

FIG. 14

FIG. 15

FIG. 16

FIG. 17

FP2

FP1

FIG. 18

FIG. 19

FIG. 20

*FIG. 21*

*FIG. 22*

2302 — INSERT A SAMPLE

2300

2304 — SELECT A TEST AREA

2306 — DETERMINE GEOMETRIES

2308 — SELECT A DENSITY

2310 — MOVE AN ABLATION POINT ALONG AN ARC PATH

2326 — ADJUST A FOCAL POINT

2312 — PULSE A LASER

2322 — SELECT THE NEXT GEOMETRY

2314 — COLLECT AN EMISSION SPECTRUM

2316 — CONVERT THE EMISSION SPECTRUM INTO A SIGNAL

NO

END OF PATH?

2318 —

YES

END OF GEOMETRIES?

2320 —

NO

YES

2324 — ANALYSE THE CONVERTED SIGNALS

*FIG. 23*

FIG. 24

FIG. 25

*FIG. 26*

*FIG. 27*

**Chromium**

*FIG. 28*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014204377 A1

- US 2009073586 A1

**Non-patent literature cited in the description**

- **JOLIVET et al.** Review of the recent advances and applications of LIBS-based imaging. *SPECTROCHIMICA ACTA. PART B: ATOMIC SPECTRO-SCOPY*, vol. 151, 41-53

- **KYUNGMIN HWANG et al.** Frequency selection rule for high definition and high frame rate Lissajous scanning. *Scientific Reports*, 26 October 2017, vol. 7 (1)